# EUROPEAN PATENT SPECIFICATION

(11) **EP 1 198 347 B1**
(45) Date of publication and mention of the grant of the patent: **06.10.2004**
(21) Application number: 00946201.1
(22) Date of filing: 21.07.2000
(51) Int. Cl.: B32B 27/12, B32B 27/20, B32B 5/32, B32B 31/00, D06N 3/00

(54) **POLYMER COATED WEB WITH GOOD WATER VAPOUR PERMEABILITY**
POLYMERBESCHICHTETES GEWEBE MIT GUTER WASSERDAMPFDURCHLÄSSIGKEIT
BANDE CONTINUE A REVETEMENT POLYMERE POSSEDANT UNE BONNE PERMEABILITE A LA VAPEUR D'EAU

(30) Priority: 21.07.1999 EP 99305768
(43) Date of publication of application: 24.04.2002
(73) Proprietor: Ahlstrom Windsor Locks LLC, Windsor Locks, CT 06096 (US)
(72) Inventor: NYBERG, Bernth, Lorentz, S-330 54 Värnamo (SE); PERSSON, Bengt, Johan, S-222 24 Lund (SE)
(74) Representative: Mercer, Christopher Paul
(86) International application number: PCT/GB2000/002832
(87) International publication number: WO 2001/005588

(56) References cited:
- EP-A- 0 734 321
- WO-A-97/29909
- US-A- 4 684 568
- US-A- 4 877 679
- US-A- 4 878 974
- US-A- 5 187 005
- DATABASE WPI Section Ch, Week 198107 Derwent Publications Ltd., London, GB; Class A32, AN 1981-10862D XP002125658 & JP 55 158961 A (UBE IND LTD), 10 December 1980 (1980-12-10)
- DATABASE WPI Section Ch, Week 199326 Derwent Publications Ltd., London, GB; Class A13, AN 1993-208571 XP002125659 & JP 05 131536 A (SUMITOMO CHEM CO LTD), 28 May 1993 (1993-05-28)

## Description

### Field of the invention.

The present invention relates to a composite material, especially a laminate material, that comprises a substrate layer and a coating layer that comprises a plastics material. The invention relates, especially to such a composite material that is permeable to water vapour and can be used as or in a wall covering.

### Background to the invention.

Many uses exist for water-vapour-permeable composite materials which have a degree of water resistance. Typical applications include diaper cover sheets, 'breathable' clothing, wrapping for prefabricated building components, wallcoverings and medical drapes and gowns. Many constructions of such composites have been proposed, usually comprising a paper, nonwoven or textile substrate which is coated with a polymeric film that has been processed to enable that film to be water-vapour permeable. One method is to form the film, then perforate it and laminate it to the substrate web; this is a complex process involving several steps. US-A-5 089 075 (Sonada), however, describes a extrusion laminating process in which the cooling roll has a modified surface that perforates the film.

Other methods employ means for providing discontinuities in the polymeric film so that if the film is stretched then pores are created. Typically, the discontinuities are created by incorporating mineral fillers into the polymeric composition before film forming. A method of forming such films is described in EP-A-0 605 831 (Yamamoto et al, assigned to Mitsubishi Petrochemical Co. Ltd.). Also, WO-A-97/29909 (Wu et al, assigned to Clopay Plastic Products Co., Inc.) describes a process in which a thermoplastic film containing pore forming fillers is extrusion coated onto a nonwoven and then stretched. These methods all require the film or composite to be stretched (various other methods of carrying out the stretching can be found in the prior art) after coating, creating an extra stage in the process.

US-A-5 262 444 (Rusincovitch et al) describes a method for the production of a wall covering in which a low boiling point additive (e.g. water) is added to a plastisol comprising a curable plastic and a plasticiser before extrusion of the plastisol onto a substrate, e.g. paper. The resultant coating is then cured under conditions such that the low- boiling point additive vaporizes and creates voids in the film.

In GB-A-2 271 519 (Kano, assigned to Toyokasei Co. Ltd.) there is described a means of creating a permeable layer in a composite product. In this case particulate materials are incorporated into a polymeric resin which is applied to a nonwoven using an automatic spray gun or painting robot. This process produces a relatively thick coating, is relatively slow and the use of spray application methods will often result in an uneven coating.

EP-B-734,321 (Kimberly-Clark Worldwide Inc.) discloses a laminate that comprises a film formed from a blend containing, on a dry weight basis relative to the total weight of the film, from 10 to 68% of a predominantly linear polyolefin polymer, for example a linear low-density polyethylene; from 30 to 80% of a filler, for example calcium carbonate, generally having an average particle size of from 0.1 to 7 µm; and from 2 to 20% of a bonding or tackifying agent, which may be selected, for example, from various hydrogenated hydrocarbon resins, petroleum hydrocarbon resins, polyterpene resins, ethylene-propylene rubber (EPR) and olefinic thermoplastic polymers in which EPR is dispersed in polypropylene or a polypropylene/polyethylene blend. Once the film has been formed, it is stretched in order to render it porous and breathable; in particular, the film should have a water vapour transmission rate of at least 100 g/m²/24 h. The stretched film is then bonded to a fibrous polyolefin nonwoven web, for example a spun bonded polypropylene web. The bonding of the film to the web may be effected by thermal bonding, in particular by using heat and pressure as with heated, patterned bonding rolls or using ultrasonic bonding means. It is suggested that the bonding agent can alternatively be added to the fibrous nonwoven web. The laminate may find use as a replacement for plastic films used as backing sheets in such absorbent products as diapers.

WO-A-98/02609 (Kimberly-Clark Worldwide Inc.) discloses a reinforced film comprising a film layer that is oriented in a direction of stretching and that has an effective gauge of 0.6 mil (15.24 µm) or less. The film layer is formed from a blend including, on a weight basis relative to the total weight of the film layer, from 30 to 70% of a polyolefin polymer, from 70% to 30% of a filler and, optionally, up to 20% of a second polyolefin polymer, the film layer having a water vapour transmission rate of at least 300 g/m²/24 h. A pattern of adhesive areas is applied to a surface of the film layer, these adhesive areas having an add-on amount of from 0.1 to 20 g/m², a percentage bond area of from 5% to 50% per unit area of said surface, and a maximum spacing between adhesive areas, in a direction generally parallel to the said direction of stretching, of 1 inch (25.4 mm) or less. A suitable polyolefin polymer is linear low-density polyethylene. A suitable filler is calcium carbonate, which may be coated with stearic acid. The adhesive may, for example, be a conventional hot melt adhesive, pressure sensitive adhesive or reactive adhesive; block copolymer-type construction adhesives, ethylene vinyl acetate-based adhesives and amorphous alpha-olefin copolymer and terpolymer-based adhesives are mentioned. Although the primary function of the pattern of adhesive areas is to reinforce the film layer, the adhesive can be selected so that it remains tacky for a sufficient period of time to allow it to bond the surface of the film layer to a surface of an adjacent layer such as a nonwoven web or fabric. The film may find use as an outer cover in personal care absorbent articles such as diapers.

A commonly used type of wallcovering is the so-called 'vinyl' wallpaper which is normally a polyvinyl chloride (PVC) plastisol coated paper. Though this material can be used for a wide range of wallcovering applications, it is particularly used in areas where good durability and washability are required in both residential and commercial applications. However, the use of PVC does create some problems: in the coating and subsequent printing process it is necessary to have emission control equipment and the wallcovering itself is not flame retardent and emits hydrochloric acid and dense smoke when exposed to flame. When based on paper, the wall covering is not particularly dimensionally stable nor is it strippable when redecoration is carried out.

In the wallcover market, concerns have also been expressed regarding the impact of the use of PVC on the environment and on health, motivating the search for alternative materials.

It could be imagined that other polymer coatings might overcome these problems but such coatings have a major disadvantage themselves; they have a very low water vapour permeability (WVP), which may be measured as the water vapour transmission rate (WVTR). Thus, when the wallcover is hung using water-based adhesives, which is the common method, the wallcovering is very slow to dry and is subsequently prone to mould growth.

### Summary of the invention.

The present invention, in one of its aspects, now provides a composite material comprising a substrate layer and a coating layer, characterised in that the coating layer comprises a plastics material, which plastics material is selected from olefin polymers, olefin copolymers, blends of olefin (co)polymers and mixtures of two or more of these, the said plastics material having particles of filler therein. In general, the composite material is permeable to water vapour. In general, the said substrate layer and the said coating layer are each permeable to water vapour. In certain embodiments no further layer is included however, in other embodiments, any additional layer will generally also be permeable to water vapour.

The present invention, in another aspect, also provides a process for the productior of a composite material, which process comprises applying a coating formulation as a coating layer on a substrate layer, the coating layer and substrate layer being permeable to water vapour, wherein the coating formulation comprises a plastics material that is selected from olefin polymers, olefin copolymers, blends of olefin (co)polymers and mixtures of two or more thereof and has particles of filler therein.

The present invention, in yet another aspect, also provides a coating formulation that comprises a plastics material that is selected from olefin polymers, olefin copolymers, blends of olefin (co)polymers and mixtures of two or more thereof and that has particles of filler therein. The coating formulation may, of course, contain one or more other components: in certain preferred embodiments, however, it consists essentially of the plastics material and the filler. The filler may be a single material or a mixture of different materials.

In further aspects, the present invention also provides the use of the said composite material as a wall covering. Thus, the invention provides the said composite material for use as a wall cover material and also provides a method of covering a wall surface that comprises applying to it a composite material of this invention.

### Description of exemplary embodiments of the invention.

When the substrate of the composite is a nonwoven, it is preferably wetlaid. Nonwovens used as the substrates will generally comprise natural, in particular cellulose, fibres and/or synthetic fibres, the latter expression including fibres of organic polymers or copolymers such as polyesters. Thus, the nonwovens can comprise woodpulp fibres, preferably both softwood and hardwood pulp fibres, and short cut polyester fibres. Additionally a filler, especially calcium carbonate, is preferably incorporated in the web to provide high opacity. The nonwoven can be bonded with a resin binder formulation, especially an acrylic or vinyl acetate resin formulation. The fibre length and linear density of the polyester fibres should be chosen to give good web uniformity and will, typically, be in the range 5 to 20 mm and 1.0 to 6.0 denier (0.11 to 0.67 tex) respectively. The woodpulps should be chosen to provide a good combination of strength, opacity and coating performance; their choice should preferably also recognise current environmental concerns.

Typical formulations for the nonwoven are 20 to 40% pulp (preferably 10 to 20% softwood pulp, 10 to 20% hardwood pulp), 10 to 20% synthetic (preferably polyester) fibre, 25 to 35% calcium carbonate, the percentages being by weight of the nonwoven on a dry weight basis, the remainder preferably comprising a binder. The binder should preferably be applied though a spray application or size press and preferably at a level to give between 15 to 20% solids in the finished substrate. The grammage (basis weight) of the substrate is preferably in the range 30 to 200 g/m². The substrate will, in certain preferred embodiments, have a thickness of from 40 to 500 µm, more preferably at least 80 µm, for example up to 300 µm.

Other substrates include papers, e.g. papers that are conventionally used as wallcovering substrates, and spunbonded, SMS and hydroentangled nonwovens. ("SMS" is a conventional acronym for a nonwoven composite comprising layers of spunbonded (S), melt blown (M) and spunbonded (S) webs.) Paper substrates may be exemplified by "Cresta Print M" and "Cresta Print F1" from Metsä-Serla Paperboard. ("Cresta" is understood to be a registered trade mark.)

The plastics material (which expression herein includes synthetic resins and synthetic polymeric materials) is preferably a polymer or copolymer of a C₂-C₄ olefin, especially of ethylene or propylene, or a blend comprising such a polymer or copolymer. Suitable co-monomers are C₁-C₄ alkyl acrylates or C₁-C₄ alkyl methacrylates. A particularly preferred plastics material is a copolymer of ethylene and n-butyl acrylate; such copolymers are described by L.K. Johnson, "Ethylene n-Butyl Acrylate Copolymers for Extrusion Coating and Lamination Applications", *Polymers, Lamination and Coatings,* a TAPPI PRESS Anthology of Published Papers, 1986-1991, pages 248-252.

Preferably, the plastics material has a water vapour transmission rate of at least 14 g/m² per 24 h at 25°C/75% RH (relative humidity) as measured on the unfilled plastics material at a mass per unit area of 45 g/m². The composite comprising the substrate layer and the coating of filled plastics material preferably has a water vapour transmission rate of at least 30 g/m² per 24 h at 25°C/75% RH.

The particulate filler distributed or dispersed (preferably uniformly distributed or dispersed) in the plastics material is preferably a mineral or inorganic filler, especially calcium carbonate and/or titanium dioxide. Other mineral fillers may come into consideration, e.g. talc, kaolinite, alumina trihydrate, feldspar or silica. Typical particle sizes of the fillers are in the range of from 0.1 to 10 µm, e.g. from 0.5 to 7 µm.

In general, the amount of particulate filler will be 40% or less, relative to the weight of filled plastics material: preferably the amount of filler will be 35% or less, more preferably 30% or less. In general, the mineral filler will be used in an amount effective to achieve a good water vapour permeability. Usually, the amount of mineral filler in the filled plastics material will be 2% or more, preferably at least 5%, more preferably 10% or more and most preferably at least 20% by weight.

Typical formulations for the plastics material are mixtures or alloys of an ethylene butyl acrylate copolymer (EBA) comprising 60 to 70% EBA, 20 to 30% calcium carbonate and 5 to 10% titanium dioxide, percentages being by weight of the mixture or alloy. Typically the basis weight (grammage) of the polymer layer is from 5 to 50 g/m², preferably from 10 to 50 g/m².

The plastics material can be applied to the substrate by any appropriate coating method. Extrusion is the preferred method, for example conventional flat die extrusion. Extrusion coating techniques are well known: see for example, Modem Plastics Encyclopaedia 1980-1981, McGraw-Hill Inc. pp 253-256. Moreover, other methods, such as knife coating, roll coating or transfer coating may come into consideration.

In certain preferred embodiments the coating layer will have a thickness of from 10 to 50 µm, e.g. from 25 to 50 µm.

A preferred embodiment of the invention comprises a wetlaid nonwoven web formed from woodpulp and polyester fibres into which is incorporated calcium carbonate bonded with resin. This nonwoven web is then extrusion coated with a polymer layer consisting of ethylene butyl acrylate, calcium carbonate and titanium dioxide.

In a particular application of the invention, a composite nonwoven is used as a base for a wallcovering which can be embossed and/or printed to give the required decorative effects. A nonwoven web, extrusion coated with a polymer, copolymer or polymer alloy, according to the invention will have many advantages over the prior art and overcomes a major problem with many other extrusion coated materials in that the material of the invention is permeable to moisture vapour so that drying of the hung wallcovering is not impeded.

The advantages of the composite nonwoven compared with the prior art, particularly the polyvinyl chloride coated papers, are that:
the composite nonwoven is fast drying and, because it is breathable, mould growth is eliminated;
since the composite is PVC free, there is no need for emission control equipment to be installed at the extrusion coating process nor in the subsequent printing processes; it is also odourless in use;
the composite has a smooth surface so that it has good rotogravure printability; it is also hot or cold embossable;
the coating layer can be applied in a thickness conventionally accepted in the wall cover art, that is to say excessively thick layers are not required;
adequate permeability may be achieved without the need for the addition of special low-boiling point additives, such as water or blowing agents;
the composite is flame retardent and there is no smoke release on burning;
the composite is dimensionally stable so that there is no seam separation and paper-based complexes are more dimensionally stable than those of the prior art;
hanging of the wallcover is facilitated by the good lay-flat properties, ease of cutting and strippability;
following the extrusion step and, if required, a curing step, there is no need for an additional processing step; in particular there is no need for a special stretching step in order to achieve the requisite permeability to water vapour. In certain preferred embodiments the composite material during its manufacture is not subjected to any substantial stretching, in either the machine direction (MD) or the cross direction (CD). Thus, in each of said directions, the composite material will normally be stretched by not more than 3 percent, preferably by not more than 2 percent, more preferably by not more than 1 percent, and most preferably there is essentially no stretching. Accordingly, the manufacturing equipment will generally be run at zero MD stretch and with no applied CD stretch. It is not precluded that in certain embodiments some shrinkage might occur in at least one direction.

The composite or laminate materials of the present invention will also come into consideration for other uses, for example in medical drape and gown materials.

### Test methods.

Grammage: ISO 536
Appearance: A visual assessment against standard samples;
   - 1 =: unacceptable
   - 2 =: accepted with major remarks.
   - 3 =: accepted with minor remarks.
   - 4 =: totally acceptable.
Curl: Measured in mm. deviation from a flat surface after making an X-cut with the arms of the X being 160 mm long and at 45° to the machine direction.
Pinholes: Bendtsen porosity measured according to ISO 8971-4 after the sample is treated at 150°C for one minute. If there is zero porosity "OK" is reported.
Water vapour transmission rate (WVTR), measured according to DIN 53122, expressed as g/m² per 24hrs at 25°C and 75% RH.
Opacity: Elrepho %, measured according to SCAN P-3: 75.
Fire rating and smoke intensity: SIS 02 48 23.
Nicotine stain: degree of yellowing when subject to tobacco smoke expressed as the % increase in the b value of the L a b colour measurements.
Dimensional stability: the % increase in length in the cross direction after 10 minutes of a 100 mm square sample pasted to a plaster board surface.
Strippability: the % of the sample remaining on a plaster board substrate after an attempt to pull the sample off 14 days after it had been pasted to the substrate.

### Examples.

The invention is illustrated by means of the following examples, in which reference is made to the above test methods.

### Example 1.

A 70 g/m² nonwoven substrate comprising a fibre blend of 40% 1.7 denier (0.19 tex), 15 mm precision cut polyester fibre and 60% woodpulp bonded with a vinyl acetate resin binder such that the total fibre content was 80% and the binder content was 20%, was extrusion coated with 40 g/m² of a polymer alloy comprising 70% ethylene n-butyl acrylate copolymer (EBA) (Borealis grade 6417), 25% calcium carbonate (particle size 2 - 5 microns) and 5% titanium dioxide (particle size 2 - 5 microns). For the extrusion, the melt temperature was in the range 280 - 300°C and the length to diameter ratio for the screw was greater than 26.The test data are shown in Table 1.

### Example 2.

This example is the same as Example 1 except that the extrusion coating was 30 g/m². The test data are again shown in Table 1.

### Example 3.

The same substrate as in Example 1 was extrusion coated with 40 g/m² of a polymer alloy comprising 60% EBA, 30% calcium carbonate and 10% titanium dioxide. This particular polymer alloy gave very inferior extrusion performance, probably because the filler content was too high. Test measurements were not made.

**Table 1**

| Property | Example 1 | Example 2 |
|---|---|---|
| Grammage (g/m²) | 111 | 101 |
| Delamination | No separation | No separation |
| Appearance | 3 | 3 |
| Curl MD | 2-3 | 2-3 |
| Curl CD | 0 | 0 |
| WVTR (g/m² per 24 hrs) | ∼50 | ∼50 |
| Elrepho opacity (%) | 76.7 | 75.5 |

The test data demonstrate that materials made by the methods of Examples 1 and 2 provide good WVTR and can be produced with no difficulty using conventional extrusion coating processes. The opacity results were less than is normally required for wallcover applications so for this end use a substrate containing filler will commonly be required. An example with such a substrate is provided in Example 5.

### Example 4.

Because the polymer compositions in Examples 1 and 2, based on EBA, gave such good results, evaluations of other polymers were carried out. In these cases the polymer blend contained no fillers and a 145 g/m² nonwoven substrate was used. (Though the grammage of the substrate was much higher than in the previous examples, it was very porous and would not have affected the WVTR results significantly.)

The extrusion coating coat weight was 45 g/m² and the polymers tested were:
- Example 4a: EBA (standard)
- Example 4b: Ethylene methyl acrylate (EMA)
- Example 4c: Low density polyethylene (LDPE)

Test data are included in Table 2.

**Table 2**

| Property | Example 4a | Example 4b | Example 4c |
|---|---|---|---|
| Delamination | No separation | No separation | No separation |
| Appearance | 4 | 4 | 4 |
| Pinholes | OK | OK | OK |
| Water test | OK | OK | OK |
| WVTR (g/m² per 24 hrs) | 14.2 | 8.8 | 1.9 |

This series of comparative tests of different polymers shows that EBA is to be preferred for high WVP. Comparison of Example 4a with Examples 1 and 2 demonstrates the synergistic effect of fillers on WVTR. The results also suggest that in order that a minimum WVTR of 30 g/m² per 24 hrs shall be achieved with a filled composition, the polymer itself should have a WVTR of 14 g/m² per 24 hrs at a mass per unit area of 45 g/m².

### Example 5.

An 115 g/m² polyester/woodpulp nonwoven (Dexter grade 11877) was extrusion coated as in Example 2. Test data are included in Table 3 and compared with a typical prior-art vinyl coated product.

**Table 3**

| | Example 5 | Prior-art vinyl |
|---|---|---|
| Total grammage (g/m²) | 140 | 180 |
| Fire rating | Class II | Class II |
| Smoke intensity | No smoke | 8° max |
| WVTR (g/m² per 24 hrs) | 30-70 | 25-55 |
| Nicotine stain (%) | 70 | 220 |
| Dimensional stability (%) | 0.07 | 0.78 |
| Strippability (% release) | 100 | 0 |
| Elrepho opacity (%) | 97 | 96 |

The overall superior performance of the example of the invention as a wall covering over that of the prior-art is clearly illustrated in the table.

It will, of course, be understood that the present invention has been described above purely by way of example and that modifications of detail can be made within the scope of the invention.

## Claims

1. A composite material for use as a base in a wallcovering, which composite material comprises a substrate layer that is permeable to water vapour and a coating layer that is permeable to water vapour such that the composite material has a water vapour transmission rate of at least 30 g/m² 24 h at 25°C/75% RH, **characterised in that** the coating layer comprises a plastics material, which plastics material consists essentially of a copolymer of an olefin and an alkyl acrylate or methacrylate or a mixture of two or more such copolymers, the said plastics material having particles of filler distributed therein, and **in that** the substrate layer comprises a nonwoven material that comprises cellulose fibres.

2. A composite material according to claim 1, in which the nonwoven material comprises woodpulp fibres.

3. A composite material according to claim 2, in which the cellulose fibres are derived from hardwood pulp and softwood pulp.

4. A composite material according to claim 1, 2 or 3, in which the nonwoven material also comprises synthetic fibres.

5. A composite material according to claim 4, in which the synthetic fibres are polyester fibres.

6. A composite material according to claim 4 or 5, in which the synthetic fibres have a fibre length of 5 to 20 mm and a linear density of 1 to 6 denier (0.11 to 0.67 tex).

7. A composite material according to any of claims 1 to 6, in which the nonwoven material is bonded with a resin binder.

8. A composite material according to claim 7, in which the resin binder is an acrylic or vinyl acetate resin.

9. A composite material according to any of claims 1 to 8, in which the nonwoven material comprises an opacity-increasing filler.

10. A composite material according to claim 9, in which the opacity-increasing filler is calcium carbonate.

11. A composite material according to any of claims 1 to 10, in which the substrate layer has a basis weight of from 30 to 200 g/m² and the coating layer has a basis weight of from 10 to 50g/m².

12. A composite material according to any of claims 1 to 11, in which the plastics material has a water vapour transmission rate of at least 14 g/m² 24 h at 25°C/75% RH, measured on the unfilled plastics material at a mass per unit area of 45 g/m².

13. A composite material according to any of claims 1 to 12 in which the plastics material comprises a copolymer of a C₂ - C₄ olefin and a C₁ - C₄ alkyl acrylate or C₁ -C₄ alkyl methacrylate.

14. A composite material according to claim 13, in which the plastics material comprises a copolymer of ethylene and butyl acrylate.

15. A composite material according to any of claims 1 to 14 in which the filler is present in the coating layer in an amount of up to 40% by weight of the filled plastics material in the coating layer.

16. A composite material according to any of claims 1 to 15, in which the filler in the plastics material is a mineral filler, e.g. calcium carbonate or a mixture of calcium carbonate and titanium dioxide.

17. A composite material according to any of claims 1 to 16, in which the coating layer has a thickness in the range of from 10 to 50 µm and the substrate layer has a thickness in the range of from 80 to 500 µm.

18. A composite material according to any of claims 1 to 17, in which the coating layer is embossed and/or printed to provide a decorative effect.

19. A process for the production of a composite material that has a water vapour transmission rate of at least 30 g/m² 24 h at 25°C/75% RH and is suitable for use as a base in a wallcovering, which process comprises applying a coating formulation as a coating layer on a substrate layer, the coating layer and substrate layer being permeable to water vapour, **characterised in that** the coating formulation comprises a plastics material that consists essentially of a copolymer of an olefin and an alkyl acrylate or methacrylate or a mixture of two or more such copolymers and has particles of filler therein, and **in that** the substrate layer comprises a nonwoven material that comprises cellulose fibres, and **in that** the composite material is not stretched by more than 3 per cent in the machine direction and is not stretched by more than 3 per cent in the cross direction.

20. A process according to claim 19 for the production of a composite material according to any of claims 2 to 17.

21. A process according to claim 19 or 20, in which the coating is effected by extrusion coating.

22. A process according to claim 19, 20 or 21 in which the composite material is not stretched by more than 2 per cent in the machine direction and is not stretched by more than 2 per cent in the cross direction.

23. A process according to claim 19, 20 or 21 in which the composite material is not stretched by more than 1 per cent in the machine direction and is not stretched by more than 1 per cent in the cross direction.

24. A process according to any of claims 19 to 23, in which the coating layer in the composite material is embossed and/or printed to provide a decorative effect.

25. The use as a wall covering of a composite material according to any of claims 1 to 18 or a composite material produced by the process according to any of claims 19 to 24.

26. A method of covering an area of wall surface that comprises applying to said area of wall surface a composite material according to any of claims 1 to 18 or produced by a process according to any of claims 19 to 24.

## Patentansprüche

1. Verbundwerkstoff für die Verwendung als Grundlage in einer Wandabdekkung, wobei der Verbundwerkstoff eine Substratschicht, die gegenüber Wasserdampf durchlässig ist, und eine Beschichtungsschicht, die gegenüber Wasserdampf durchlässig ist, umfaßt, so daß der Verbundwerkstoff eine Wasserdampfdurchlaßrate von mindestens 30 g/m² 24h bei 25°C/75% RH aufweist, **dadurch gekennzeichnet, daß** die Beschichtungsschicht ein Kunststoffmaterial umfaßt, wobei das Kunststoffmaterial im wesentlichen aus einem Copolymer aus einem Olefin und einem Alkylacrylat oder Methacrylat oder einem Gemisch von zwei oder mehreren derartiger Copolymere besteht, wobei das Kunststoffmaterial darin verteilte Füllstoffteilchen aufweist, und daß die Substratschicht ein Vliesmaterial umfaßt, das Cellulosefasern umfaßt.

2. Verbundwerkstoff nach Anspruch 1, wobei das Vliesmaterial Zellstofffasern umfaßt.

3. Verbundwerkstoff nach Anspruch 2, wobei die Cellulosefasern von Hartzellstoff und Weichzellstoff abgeleitet sind.

4. Verbundwerkstoff nach Anspruch 1, 2 oder 3, wobei das Vliesmaterial auch synthetische Fasern umfaßt.

5. Verbundwerkstoff nach Anspruch 4, wobei die synthetischen Fasern Polyesterfasern sind.

6. Verbundwerkstoff nach Anspruch 4 oder 5, wobei die synthetischen Fasern eine Faserlänge von 5 bis 20 mm und eine längenbezogene Masse von 1 bis 6 Denier (0,11 bis 0,67 tex) aufweisen.

7. Verbundwerkstoff nach einem der Ansprüche 1 bis 6, wobei das Vliesmaterial mit einem Harzbindemittel gebunden ist.

8. Verbundwerkstoff nach Anspruch 7, wobei das Harzbindemittel ein Acryl- oder Vinylacetatharz ist.

9. Verbundwerkstoff nach einem der Ansprüche 1 bis 8, wobei das Vliesmaterial einen opazitätssteigemden Füllstoff umfaßt.

10. Verbundwerkstoff nach Anspruch 9, wobei der opazitätssteigemde Füllstoff Calciumcarbonat ist.

11. Verbundwerkstoff nach einem der Ansprüche 1 bis 10, wobei die Substratschicht ein Flächengewicht von 30 bis 200 g/m² und die Beschichtungsschicht ein Flächengewicht von 10 bis 50 g/m² aufweisen.

12. Verbundwerkstoff nach einem der Ansprüche 1 bis 11, wobei das Kunststoffmaterial eine Wasserdampfdurchlaßrate von mindestens 14 g/m² 24h bei 25°C/75% RH, gemessen an einem ungefüllten Kunststoffmaterial bei einer Masse pro Flächeneinheit von 45 g/m², aufweist.

13. Verbundwerkstoff nach einem der Ansprüche 1 bis 12, wobei das Kunststoffmaterial ein Copolymer eines C₂-C₄-Olefins und eines C₁-C₄-Alkylacrylats oder eines C₁-C₄-Alkylmethacrylats umfaßt.

14. Verbundwerkstoff nach Anspruch 13, wobei das Kunststoffmaterial ein Copolymer von Ethylen und Butylacrylat umfaßt.

15. Verbundwerkstoff nach einem der Ansprüche 1 bis 14, wobei der Füllstoff in der Beschichtungsschicht in einer Menge von bis zu 40 Gew.-% des gefüllten Kunststoffmaterials in der Beschichtungsschicht vorhanden ist.

16. Verbundwerkstoff nach einem der Ansprüche 1 bis 15, wobei der Füllstoff in dem Kunststoffmaterial ein mineralischer Füllstoff, beispielsweise Calciumcarbonat oder ein Gemisch von Calciumcarbonat und Titandioxid, ist.

17. Verbundwerkstoff nach einem der Ansprüche 1 bis 16, wobei die Beschichtungsschicht eine Dicke in einem Bereich von 10 bis 50 µm aufweist und die Substratschicht eine Dicke in einem Bereich von 80 bis 500 µm aufweist.

18. Verbundwerkstoff nach einem der Ansprüche 1 bis 17, wobei die Beschichtungsschicht geprägt und/oder bedruckt ist, um einen dekorativen Effekt bereitzustellen.

19. Verfahren zur Herstellung eines Verbundwerkstoffs, der eine Wasserdampfdurchlaßrate von mindestens 30 g/m² 24h bei 25°C/75% RH aufweist und für die Verwendung als Grundlage in einer Wandabdeckung geeignet ist, wobei das Verfahren das Anwenden einer Beschichtungsformulierung als eine Beschichtungsschicht auf einer Substratschicht umfaßt, wobei die Beschichtungsschicht und die Substratschicht gegenüber Wasserdampf durchlässig sind, **dadurch gekennzeichnet, daß** die Beschichtungsformulierung ein Kunststoffmaterial umfaßt, das im wesentlichen aus einem Copolymer aus einem Olefin und einem Alkylacrylat oder Methacrylat oder einem Gemisch von zwei oder mehreren derartiger Copolymere besteht, und das darin Füllstoffteilchen aufweist, und daß die Substratschicht ein Vliesmaterial umfaßt, das Cellulosefasern umfaßt, und daß der Verbundwerkstoff nicht um mehr als 3% in der Maschinenrichtung und nicht um mehr als 3% in der Querrichtung gestreckt wird.

20. Verfahren nach Anspruch 19 zur Herstellung eines Verbundwerkstoffs nach einem der Ansprüche 2 bis 17.

21. Verfahren nach Anspruch 19 oder 20, wobei die Beschichtung durch Extrusionsbeschichtung bewirkt wird.

22. Verfahren nach Anspruch 19, 20 oder 21, wobei der Verbundwerkstoff nicht um mehr als 2% in der Maschinenrichtung und nicht um mehr als 2% in der Querrichtung gestreckt wird.

23. Verfahren nach Anspruch 19, 20 oder 21, wobei der Verbundwerkstoff nicht um mehr als 1% in der Maschinenrichtung und nicht um mehr als 1% in der Querrichtung gestreckt wird.

24. Verfahren nach einem der Ansprüche 19 bis 23, wobei die Beschichtungsschicht in dem Verbundwerkstoff geprägt und/oder bedruckt wird, um einen dekorativen Effekt bereitzustellen.

25. Verwendung eines Verbundwerkstoffs nach einem der Ansprüche 1 bis 18 oder eines Verbundwerkstoffs, hergestellt durch das Verfahren nach einem der Ansprüche 19 bis 24, als Wandabdeckung.

26. Verfahren zum Abdecken eines Bereichs einer Wandoberfläche, umfassend das Anwenden eines Verbundwerkstoffs nach einem der Ansprüche 1 bis 18 oder eines Verbundwerkstoffs, hergestellt durch ein Verfahren nach einem der Ansprüche 19 bis 24, auf diesen Bereich der Wandoberfläche.

## Revendications

1. Matériau composite destiné à servir de base dans un revêtement mural, lequel matériau composite comprend une couche substrat qui est perméable à la vapeur d'eau et une couche d'enduction qui est perméable à la vapeur d'eau, de sorte que le matériau composite présente un taux de transmission de vapeur d'eau d'au moins 30 g/m² par 24 h à 25° C/75 % HR, **caractérisé en ce que** la couche d'enduction comprend un matériau plastique, lequel est essentiellement constitué d'un copolymère d'une oléfine et d'un acrylate ou méthacrylate d'alkyle, ou d'un mélange de deux ou plus de deux copolymères de ce type, ledit matériau plastique contenant des particules de charge réparties à l'intérieur, et **en ce que** la couche substrat comprend un matériau non tissé qui comprend des fibres de cellulose.

2. Matériau composite selon la revendication 1, dans lequel le matériau non tissé comprend des fibres de pâte de bois.

3. Matériau composite selon la revendication 2, dans lequel les fibres de cellulose sont tirées de pâte de feuillus et de pâte de bois résineux.

4. Matériau composite selon la revendication 1, 2 ou 3, dans lequel le matériau non tissé comprend également des fibres synthétiques.

5. Matériau composite selon la revendication 4, dans lequel les fibres synthétiques sont des fibres de polyester.

6. Matériau composite selon la revendication 4 ou 5, dans lequel les fibres synthétiques ont une longueur de fibre de 5 à 20 mm et une densité linéaire de 1 à 6 deniers (0,11 à 0,67 tex).

7. Matériau composite selon l'une quelconque des revendications 1 à 6, dans lequel le matériau non tissé est lié par un liant à base de résine.

8. Matériau composite selon la revendication 7, dans lequel le liant à base de résine est une résine acrylique ou d'acétate de vinyle.

9. Matériau composite selon l'une quelconque des revendications 1 à 8, dans lequel le matériau non tissé comprend une charge augmentant l'opacité.

10. Matériau composite selon la revendication 9, dans lequel la charge augmentant l'opacité est du carbonate de calcium.

11. Matériau composite selon l'une quelconque des revendications 1 à 10, dans lequel la couche substrat a un grammage de 30 à 200 g/m² et la couche d'enduction a un grammage de 10 à 50 g/m².

12. Matériau composite selon l'une quelconque des revendications 1 à 11, dans lequel le matériau plastique a un taux de transmission de vapeur d'eau d'au moins 14 g/m² par 24 h à 25° C/75 % HR, mesuré sur le matériau plastique non chargé pour une masse surfacique de 45 g/m².

13. Matériau composite selon l'une quelconque des revendications 1 à 12, dans lequel le matériau plastique comprend un copolymère d'une oléfine en C₂ à C₄ et d'un acrylate d'alkyle en C₁ à C₄ ou d'un méthacrylate d'alkyle en C₁ à C₄.

14. Matériau composite selon la revendication 13, dans lequel le matériau plastique comprend un copolymère d'éthylène et d'acrylate de butyle.

15. Matériau composite selon l'une quelconque des revendications 1 à 14, dans lequel la charge est présente dans la couche d'enduction à raison de 40 % au plus en poids du matériau plastique chargé dans la couche d'enduction.

16. Matériau composite selon l'une quelconque des revendications 1 à 15, dans lequel la charge contenue dans le matériau plastique est une charge minérale, par exemple du carbonate de calcium ou un mélange de carbonate de calcium et de dioxyde de titane.

17. Matériau composite selon l'une quelconque des revendications 1 à 16, dans lequel la couche d'enduction a une épaisseur comprise entre 10 et 50 µm et la couche substrat a une épaisseur comprise entre 80 et 500 µm.

18. Matériau composite selon l'une quelconque des revendications 1 à 17, dans lequel la couche d'enduction est gaufrée et/ou imprimée afin de fournir un effet décoratif.

19. Procédé destiné à produire un matériau composite qui a un taux de transmission de vapeur d'eau d'au moins 30 g/m² par 24 h à 25° C/75 % HR et est apte à servir de base dans un revêtement mural, lequel procédé comprend l'application d'une formulation d'enduction comme couche d'enduction sur une couche substrat, la couche d'enduction et la couche substrat étant perméables à la vapeur d'eau, **caractérisé en ce que** la formulation d'enduction comprend un matériau plastique essentiellement constitué d'un copolymère d'une oléfine et d'un acrylate ou méthacrylate d'alkyle, ou d'un mélange de deux ou plus de deux copolymères de ce type, et contient des particules de charge à l'intérieur, **en ce que** la couche substrat comprend un matériau non tissé qui comprend des fibres de cellulose, et **en ce que** le matériau composite ne s'étire pas de plus de 3 % dans le sens machine et ne s'étire pas de plus de 3 % dans le sens travers.

20. Procédé selon la revendication 19 destiné à la production d'un matériau composite selon l'une quelconque des revendications 2 à 17.

21. Procédé selon la revendication 19 ou 20, dans lequel l'enduction est effectuée par revêtement par extrusion.

22. Procédé selon la revendication 19, 20 ou 21, dans lequel le matériau composite ne s'étire pas de plus de 2 % dans le sens machine et ne s'étire pas de plus de 2 % dans le sens travers.

23. Procédé selon la revendication 19, 20 ou 21, dans lequel le matériau composite ne s'étire pas de plus de 1 % dans le sens machine et ne s'étire pas de plus de 1 % dans le sens travers.

24. Procédé selon l'une quelconque des revendications 19 à 23, dans lequel la couche d'enduction présente dans le matériau composite est gaufrée et/ou imprimée afin de fournir un effet décoratif.

25. Utilisation comme revêtement mural d'un matériau composite selon l'une quelconque des revendications 1 à 18, ou d'un matériau composite produit par le procédé selon l'une quelconque des revendications 19 à 24.

26. Procédé de recouvrement d'une zone de surface murale, qui comprend l'application à ladite zone de surface murale d'un matériau composite selon l'une quelconque des revendications 1 à 18 ou produit par un procédé selon l'une quelconque des revendications 19 à 24.
